# EUROPEAN PATENT APPLICATION

(11) **EP 4 582 051 A1**
(43) Date of publication of application: **09.07.2025**
(21) Application number: 22957843.0
(22) Date of filing: 21.09.2022
(51) Int. Cl.: A61C 17/34, G07F 13/00, A61C 17/22

(54) **CONSUMPTION CONTROL METHOD FOR CONSUMABLES, APPARATUS, AND CONSUMPTION CONTROL SYSTEM**

(30) Priority: 06.09.2022 CN 202211084632
(71) Applicant: Dimi Life Technology Co., Ltd., Shenzhen, Guangdong 518063 (CN)
(72) Inventor: QUAN, Hongwei, Shenzhen, Guangdong 518063 (CN); LIU, Ning, Shenzhen, Guangdong 518063 (CN); SONG, Lei, Shenzhen, Guangdong 518063 (CN)
(74) Representative: Murgitroyd & Company
(86) International application number: PCT/CN2022/120246
(87) International publication number: WO 2024/050875

(57) **Abstract**

Embodiments of the present disclosure relate to the field of intelligent control technology, and disclose a consumable consumption control method, device and system. In the method, when an apparatus that consumes consumables moves to a preset range of a container for loading consumables, communication between the apparatus and the container is established so that the apparatus obtains consumable information of the consumables and operation instructions of the container; then, an operation mode of the apparatus is set according to the operation instructions, and consumption setting of the consumables may be determined according to the consumable information.

## Description

### CROSS-REFERENCE TO RELATED APPLICATION

The present disclosure claims the priority of Chinese Application No. 202211084632.1, filed on September 6, 2022, the disclosure of which is incorporated in its entirety by reference herein.

### TECHNICAL FIELD

Embodiments of the present disclosure relates to the field of intelligent control technologies, and in particular to a consumable consumption control method, device and system.

### BACKGROUND

Currently, for consumable products such as toothpaste and mouthwash, users usually need to manually squeeze a container to squeeze out consumables, or pump out the consumables through a manual pump. On the market, there are also some products that can automatically squeeze out or pump out the consumables. Such products are usually controlled by a built-in central processing unit (CPU) and pre-programmed software, or by an external personal computer (PC) or other similar host computers.

In the process of implementing embodiments of the present disclosure, inventors found that there are at least the following problems in the above related technologies: the current automated consumable consumption, squeezing out or pumping products cannot identify properties of consumables, cannot be compatible with different consumables, and cannot achieve intelligent control of the consumables.

### SUMMARY

Embodiments of the present disclosure provide a consumable consumption control method, device and system.

An object of the embodiments of the present disclosure is achieved through the following technical solutions.

In order to solve the above technical problems, in a first aspect, one embodiment of the present disclosure provides a consumable consumption control method, including: when an apparatus that consumes a consumable moves to a preset range of a container for loading the consumable, establishing communication between the apparatus and the container so that the apparatus obtains consumable information of the consumable and an operation instruction of the container; setting an operation mode of the apparatus according to the operation instruction; determining consumption setting of the consumable according to the consumable information; and controlling the apparatus to operate according to the operation mode and consume the consumable according to the consumption setting.

In some embodiments, the container is provided with an electronic tag, and the electronic tag stores the consumable information; the apparatus is provided with an electronic tag controller, and the electronic tag controller is configured to detect the electronic tag within the preset range and establish a communication connection between the apparatus and the container.

In some embodiments, the electronic tag is a radio frequency identification tag, and the electronic tag controller is a radio frequency identification tag reader; or, the electronic tag is a near field communication tag, and the electronic tag controller is a near field communication tag reader.

In some embodiments, the apparatus is provided with a plurality of buttons; the setting an operation mode of the apparatus, includes: setting operation modes corresponding to the buttons according to the consumable information; and selecting the operation mode of the apparatus through the buttons.

In some embodiments, the consumption setting at least includes a push amount, push duration and/or push number of the consumable; the apparatus is further provided with a micro pump; the consuming the consumable according to the consumption setting, includes: controlling the push amount, push duration and/or push number of the consumable through the micro pump.

In some embodiments, the consumable information is general information of the consumable, and the consumable information at least includes type, brand, manufacturer, model, date, batch, raw material and/or viscosity of the consumable.

In some embodiments, before the establishing communication between the apparatus and the container, the method further includes: reading verification codes in the container for verification; if the verification is successful, establishing the communication; and/or, reading mask codes in the container for matching; if the match is successful, establishing the communication.

In some embodiments, the method further includes: outputting, by the apparatus, visual and/or audible information, according to the operation mode and/or an action performed by the apparatus; wherein if the apparatus fails to detect the container within a preset time, the apparatus outputs alarm-type visual and/or audible information.

In some embodiments, the method further includes: controlling the apparatus to start up and load firmware information; wherein if the apparatus does not detect the container within a preset time, the apparatus operates in a default mode, or enters a standby state or a low-power state.

In some embodiments, after the establishing communication between the apparatus and the container, the method further includes: if a firmware version of the apparatus is inconsistent with a firmware version of the container and a firmware version recorded in the container is a newer version than the firmware version of the apparatus, controlling the apparatus to upgrade the firmware according to firmware binary codes of the container.

In order to solve the above technical problems, in a second aspect, one embodiment of the present disclosure provides an apparatus, including: at least one processor; and, a memory in communication with the at least one processor; wherein the memory stores instructions executable by the at least one processor; the instructions, when executed by the at least one processor, cause the at least one processor to perform the method of the first aspect.

In order to solve the above technical problems, in a third aspect, one embodiment of the present disclosure provides a consumable consumption control system, including: a container and the apparatus of the second aspect; wherein the container is configured to be compatible with and load consumables of several different types and sizes; the apparatus is configured to communicate with the container when the apparatus is within a preset range of the container.

In some embodiments, the container is provided with an electronic tag, and the apparatus is provided with an electronic tag controller.

In order to solve the above technical problems, in a fourth aspect, one embodiment of the present disclosure provides a consumable consumption control device, including:
an establishing module configured to, when an apparatus that consumes a consumable moves to a preset range of a container for loading the consumable, establish communication between the apparatus and the container so that the apparatus obtains consumable information of the consumable and an operation instruction of the container;
a setting module configured to set an operation mode of the apparatus according to the operation instruction;
a determination module configured to determine consumption setting of the consumable according to the consumable information;
a control module configured to control the apparatus to operate according to the operation mode and consume the consumable according to the consumption setting.

The beneficial effects of the present disclosure are as follows. The embodiments of the present disclosure provide the consumable consumption control method, device and system. In the method, when an apparatus that consumes consumables moves to a preset range of a container for loading consumables, communication between the apparatus and the container is established so that the apparatus obtains consumable information of the consumables and operation instructions of the container; then, an operation mode of the apparatus is set according to the operation instructions, and consumption setting of the consumables may be determined according to the consumable information. The method provided in the present disclosure can control the apparatus to operate in accordance with the operation mode and consume the consumable in accordance with the consumption setting, thereby realizing intelligent management of the consumable consumption status and the operation mode of the apparatus.

### BRIEF DESCRIPTION OF THE DRAWINGS

One or more embodiments are exemplarily described by using the figures in the corresponding accompany drawings. The exemplary descriptions do not constitute limitations to the embodiments. Elements/modules and steps having a same reference digital number in the accompany drawings represent similar elements/modules and steps, and unless indicated otherwise, the figures in the accompany drawings do not constitute proportion limitations.
FIG. 1 is a schematic flowchart of a consumable consumption control method according to a first embodiment of the present disclosure;
FIG. 2 is a schematic diagram showing of a device and a container according to the first embodiment of the present disclosure;
FIG. 3 is a schematic flowchart of another consumable consumption control method according to the first embodiment of the present disclosure;
FIG. 4 is a schematic flowchart of still another consumable consumption control method according to the first embodiment of the present disclosure;
FIG. 5 is a schematic flowchart of yet still another consumable consumption control method according to the first embodiment of the present disclosure;
FIG. 6 is a schematic diagram of a consumable consumption control device according to a second embodiment of the present disclosure;
FIG. 7 is a schematic diagram of another consumable consumption control device according to the second embodiment of the present disclosure;
FIG. 8 is a schematic diagram showing hardware structure of an apparatus capable of executing the consumable consumption control method of the first embodiment, according to a third embodiment of the present disclosure;
FIG. 9 is a schematic diagram of a consumable consumption control system according to the third embodiment of the present disclosure; and
FIG. 10 is a schematic diagram of a consumable consumption control device according to an embodiment of the present disclosure.

### DETAILED DESCRIPTION

The present disclosure is described in detail hereafter in conjunction with specific embodiments. The following embodiments will help those skilled in the art to further understand the present disclosure, but are not intended to limit the present disclosure in any form. It is to be noted that, for those skilled in the art, several variations and improvements may be made without departing from the concept of the present disclosure, which are all fall within the scope of protection of the present disclosure.

In order to make the purpose, technical solution and advantages of the present disclosure more clear, the present disclosure is further described in detail hereinafter in conjunction with the accompanying drawings and embodiments. It is to be understood that the specific embodiments described herein are only used to explain the present disclosure and are not used to limit the present disclosure.

It is to be noted that, if there is no conflict, various features in the embodiments of the present disclosure nay be combined with each other, which are all within the scope of protection of the present disclosure. In addition, although functional modules are divided in schematic diagrams of devices and logical orders are shown in the flowchart, in some cases, module divisions in the apparatus may be varied, or steps shown or described may be performed in a different order than that in the flowchart.

Unless otherwise defined, any technical or scientific terms used herein shall have the common meaning understood by a person of ordinary skills. The terms used in the specification of the present disclosure are only for the purpose of describing specific embodiments and are not intended to limit the present disclosure. The term "and/or" used in this specification includes any and all combinations of one or more of related listed items.

In addition, technical features involved in each embodiment of the present disclosure described hereinafter can be combined with each other as long as there is no conflict between them.

Specifically, the embodiments of the present disclosure are further described hereinafter in conjunction with the accompanying drawings.

### First embodiment

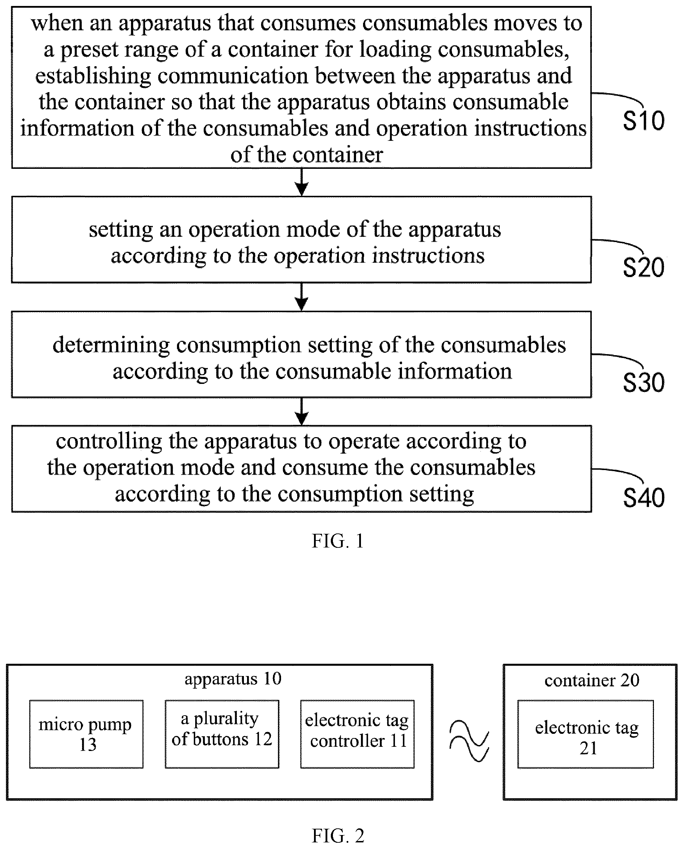

This embodiment of the present disclosure provides a consumable consumption control method. Referring to FIG. 1, it shows a schematic flowchart of a consumable consumption control method according to one embodiment of the present disclosure. The method includes but is not limited to the following steps.

Step S10: when an apparatus that consumes consumables moves to a preset range of a container for loading consumables, establishing communication between the apparatus and the container so that the apparatus obtains consumable information of the consumables and operation instructions of the container.

The consumable information is general information of the consumables. The consumable information at least includes type, brand, manufacturer, model, date, batch, raw material and/or viscosity of the consumables. The preset range may be a range within a certain radius from the container, etc., which may be set according to actual needs.

In this embodiment of the present disclosure, the apparatus and the container can communicate with each other through an electronic tag, etc. When the apparatus is close to the container and reaches a preset range where data can be read, the apparatus reads label information of the electronic tag on the container, thereby obtaining consumable information such as properties of the consumables loaded in the container and thus realizing identification of the consumables. Meanwhile, when reading the electronic tag, operation instructions related to the consumables and/or the apparatus for controlling operation of the apparatus may be also obtained. When there are many instructions, an instruction set of multiple operation instructions can be simultaneously obtained so that the apparatus can enter different modes and perform different tasks according to different consumables. A size of the preset range can be set according to actual needs. For example, the preset range can be set to be smaller so that the container can only establish communication with the apparatus only when the container is loaded into the apparatus and inserted into the apparatus; or, the preset range can also be set to be within the preset radius from the container, etc., which may be set based on actual structures, products, actual application scenario, etc. of the container and the apparatus.

Referring to FIG. 2, it shows structures of the apparatus and the container according to the embodiment of the present disclosure. An electronic tag 21 is provided on the container 20. The electronic tag 21 stores the consumable information. An electronic tag controller 11 is provided in the apparatus 10. The electronic tag controller 11 is configured to detect the electronic tag 21 within the preset range and establish a communication connection between the apparatus 10 and the container 20. The container 20 and the apparatus 10 may use radio frequency identification (RFID) technology to achieve wireless communication and data communication, that is, the electronic tag 21 is an RFID tag, and the electronic tag controller 11 is an RFID tag reader; or, the container 20 and the apparatus 10 may use near field communication (NFC) technology to achieve wireless communication and data communication, that is, the electronic tag 21 is a near field communication tag, and the electronic tag controller 11 is a near field communication tag reader; or, the container 20 and the apparatus 10 may use Bluetooth to achieve wireless communication and data communication; or, the container 20 and the apparatus 10 may use infrared transmission technology to achieve wireless communication and data communication. Specifically, the manner for realizing wireless communication and data communication between the container 20 and the apparatus 10 can be set according to actual needs and does not need to be limited to the embodiments of the present disclosure.

Taking the consumables being toothpaste as an example, the container 20 is loaded with the toothpaste, and the container 20 is attached with an electronic tag of the toothpaste. The apparatus 10 may be a toothbrush, and the toothbrush has a built-in electronic tag controller 11 and related circuits. When the toothbrush enters a communication range of the container 20 containing the toothpaste, such as a radio frequency range, the toothbrush can establish a communication connection with the container 20 and read consumable information of the toothpaste and operation instructions stored in the electronic tag 21.

Step S20: setting an operation mode of the apparatus according to the operation instructions.

In the embodiment of the present disclosure, after obtaining the operating instructions, the apparatus can set the operation mode, auxiliary function, operation time, start device operation, etc. of the current device according to the read instructions. After execution is completed, the apparatus detects whether there is any operation instruction that has not been executed; if there is any, the apparatus continues to perform the unexecuted operation instruction; if there is a new operation instruction that is read or input, the apparatus performs the new operation instruction.

Further, referring to FIG. 2 again, the apparatus 10 may also be provided with a plurality of buttons 12. The setting the operation mode of the apparatus may include: setting operation modes corresponding to the buttons according to the consumable information; and selecting an operation mode of the apparatus through the buttons. In the embodiment of the present disclosure, one or more buttons 12 may further be provided on the apparatus, so that through the buttons 12, a user can manually switch to different operation modes, use different functions, input new operation instructions, etc. Function and mode setting of the buttons 12, the number of the buttons 12, etc. may be set according to actual needs.

Still taking the container being a container for loading toothpaste and the apparatus being a toothbrush as an example, after obtaining the operation instructions, the apparatus switches to a brushing mode matching the toothpaste in the container and starts to operate at corresponding vibration intensity and frequency. Meanwhile, the apparatus may be switched to different operation modes such as cleaning mode, massage mode, cooling mode, heating mode, etc., manually through several buttons 12 or automatically based on different operation instructions, which can be set according to actual needs.

Step S30: determining consumption setting of the consumables according to the consumable information.

The consumption setting at least includes a push amount, push duration and/or push number of the consumables. In the embodiment of the present disclosure, after obtaining the consumable information, a specific consumption mode of the consumables can be set according to the consumable information and situations of the apparatus, thereby accurately and intelligently controlling consumption of the consumables.

Still taking the container being a container for loading toothpaste and the apparatus being a toothbrush as an example, after obtaining the consumable information such as viscosity of the toothpaste recorded in the electronic tag, the consumption setting of the consumables is determined based on the consumable information of the toothpaste, in combination with information of duration during which a micro pump for pumping out toothpaste in the apparatus pushes or sucks out the toothpaste, and/or information of a push amount of the toothpaste per time. For example, according to the model and viscosity information of the toothpaste, it is determined that the push amount of the toothpaste per time is about 0.6g, the push duration per time is 5s, and a maximum push number is 20 times, etc., which specifically can be set according to actual needs, and is not limited to the embodiments of the present disclosure.

Further, the consumption of consumables can also be determined based on the consumable information and the consumption settings, and when the consumables are completely consumed or about to be consumed, the apparatus is shut down or paused, and is waiting to be restarted after replacing the consumables or container.

Step S40: controlling the apparatus to operate according to the operation mode and consume the consumables according to the consumption setting.

When the consumption setting includes the push amount, push time and/or push number of the consumables, it can be known from the above step S30 that, specifically, continuing to refer to FIG. 2, a micro pump 13 is further provided in the apparatus 10. The consuming the consumables according to the consumption setting, may include: controlling the push amount, push duration and/or push number of the consumables through the micro pump 13. In some other embodiments, the consumables may be taken out of the container 20 by other mechanical devices, and corresponding circuit structures, operation instructions, etc. are correspondingly set, which may be specifically set according to actual needs.

Still taking the container being a container for loading toothpaste and the apparatus being a toothbrush as an example, after determining the consumption setting of the consumables, the apparatus can adjust thrust or operation duration of the micro pump 13 or a speed of a motor of the micropump 13 according to the current operation mode and the consumption setting, to push or suck the toothpaste out onto a head of the toothbrush.

Further, the apparatus may also be compatible with different containers, or the container may also be compatible with different devices. For example, if the consumables may be toothpaste or mouthwash, the same/same model of container may be used to be compatible with different devices; that is, when the consumables is toothpaste, the container loaded with the toothpaste may match a toothbrush, and when the consumables is mouthwash, the container loaded with the mouthwash may match a water flosser. When the consumables is mouthwash, similarly, by detecting the electronic tag, different operation modes such as water flosser mode can be started, and different consumption settings such as setting different push amounts, push duration and push number of mouthwash may be determined, which may be set according to actual needs.

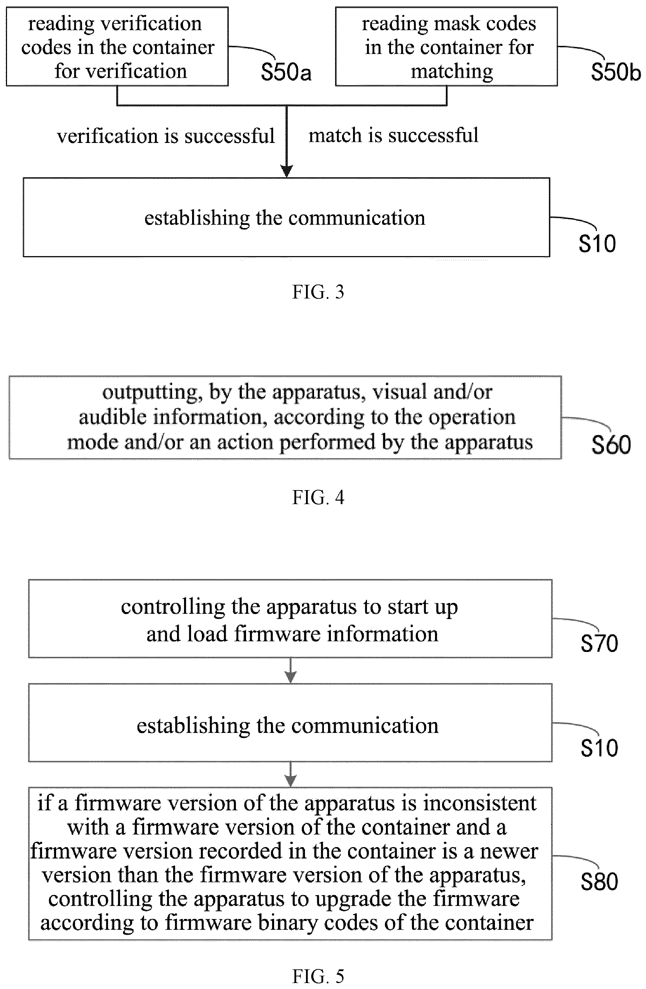

In some embodiments, referring to FIG. 3, which shows a flowchart of another consumable consumption control method according to one embodiment of the present disclosure. Before the step S10 of establishing communication between the apparatus and the container, the method further includes:
Step S50a: reading verification codes in the container for verification, and if the verification is successful, jumping to the step S10 to establish the communication;
   and/or,
Step S50b: reading mask codes in the container for matching, and if the match is successful, jumping to the step S10 to establish the communication.

In the embodiments of the present disclosure, optionally, the apparatus may be compatible with containers containing different consumables. However, in some special scenarios or when necessary, there may be a situation where multiple devices need to be bound to one container, or one device needs to be bound to multiple containers, or one device needs to be bound to only one container. For example, in anti-counterfeiting, the verification codes can be read for verification, and/or, the mask codes can be read for matching, to determine whether communication can be established and whether the consumables can be used.

In some embodiments, referring to FIG. 4, which shows a flowchart of another consumable consumption control method according to one embodiment of the present disclosure. In the process of executing each step, the method further includes:
Step S60: outputting, by the apparatus, visual and/or audible information, according to the operation mode and/or an action performed by the apparatus.

If the apparatus fails to detect the container within a preset time, the apparatus outputs alarm-type visual and/or audible information.

In the embodiment of the present disclosure, after executing the corresponding instructions, functions and actions, the apparatus can further output visual and/or audible information to remind the user. For example, visual information can be displayed on a display screen, voice can be played on a speaker, different lighting and sound effects can be set for use, etc., which can be set according to actual needs. In addition, if the container is not detected at a certain time interval within a preset time, an alarm-type visual and/or audible information can be output to remind the user.

In some embodiments, referring to FIG. 5, which shows a flowchart of another consumable consumption control method according to one embodiment of the present disclosure. Before the step S10, the method further includes:
Step S70: controlling the apparatus to start up and load firmware information.

If the apparatus does not detect the container within the preset time, the apparatus operates in a default mode, or enters a standby state or a low-power state. In the embodiment of the present disclosure, the apparatus also needs to be turned on manually by the user or automatically through intelligent settings before the apparatus can perform various functions. After the apparatus is turned on, the firmware information is loaded to prepare for the execution of various functions.

In some embodiments, continuing to refer to FIG. 5, after the step S10 of establishing communication between the apparatus and the container, the method further includes:
Step S80: if a firmware version of the apparatus is inconsistent with a firmware version of the container and a firmware version recorded in the container is a newer version than the firmware version of the apparatus, controlling the apparatus to upgrade the firmware according to firmware binary codes of the container.

In the embodiment of the present disclosure, in order to realize intelligent update of the apparatus's firmware, a latest firmware binary code can be burned on the electronic tag on a replaceable container or consumables. After the apparatus reads an upgrade operation instruction, the apparatus upgrades a firmware upgrade entry in an instruction set, reads the latest firmware binary code and writes the latest firmware binary code into a storage space, so that when the apparatus is turned on next time, the latest firmware can be directly loaded onto the apparatus, thereby realizing intelligent firmware update. In this way, users does not need to spend time and effort to update the firmware by themselves. Meanwhile, when the apparatus's firmware needs to be upgraded, it is only needed to replace the container or the electronic tag on the container, which is low in cost.

### Second embodiment

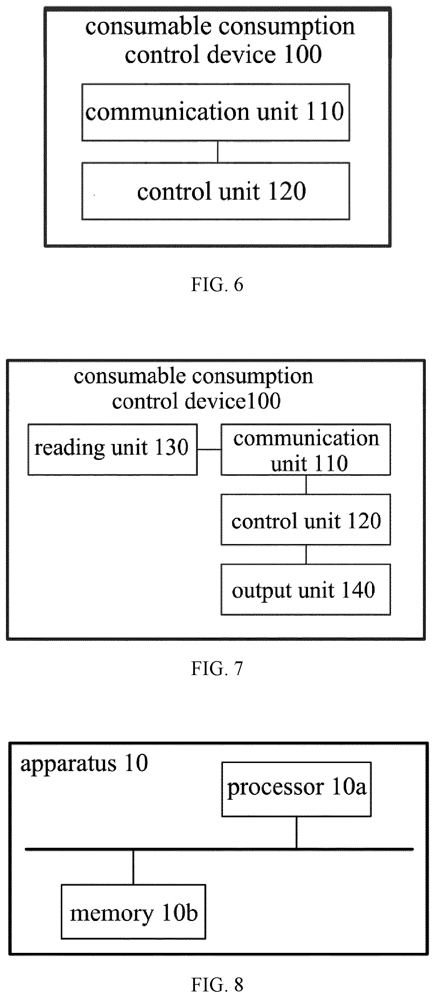

This embodiment of the present disclosure provides a consumable consumption control device. Referring to FIG. 6, which shows a consumable consumption control device 100 according to one embodiment of the present disclosure. The consumption control device 100 may be a module, unit, etc. arranged in the apparatus 10 as described in the first example. The consumption control device 100 includes: a communication unit 110 and a control unit 120.

The communication unit 110 is used to, when an apparatus that consumes consumables moves to a preset range of a container for loading consumables, establish communication between the apparatus and the container so that the apparatus obtains consumable information of the consumables and operation instructions of the container. The control unit 120 is used to set an operation mode of the apparatus according to the operation instructions. The control unit 120 is further used to determinr consumption setting of the consumables according to the consumable information. The control unit 120 is further used to control the apparatus to operate according to the operation mode and consume the consumables according to the consumption setting.

In some embodiments, an electronic tag is provided on the container. The electronic tag stores the consumable information. An electronic tag controller is provided in the apparatus. The electronic tag controller is configured to detect the electronic tag within the preset range and establish a communication connection between the apparatus and the container.

In some embodiments, the electronic tag is a radio frequency identification tag, and the electronic tag controller is a radio frequency identification tag reader; or, the electronic tag is a near field communication tag, and the electronic tag controller is a near field communication tag reader.

In some embodiments, the apparatus is provided with a plurality of buttons, and the control unit 120 is further used to set operation modes corresponding to the buttons according to the consumable information, and select an operation mode of the apparatus through the buttons.

In some embodiments, the consumption setting at least includes a push amount, push duration and/or push number of the consumables. A micro pump is further provided in the apparatus. The control unit 120 is further used to control the push amount, push duration and/or push number of the consumables through the micro pump.

In some embodiments, the consumable information is general information of the consumables. The consumable information at least includes type, brand, manufacturer, model, date, batch, raw material and/or viscosity of the consumables.

In some embodiments, referring to FIG. 7, it shows another consumable consumption control device 100 according to one embodiment of the present disclosure. The consumption control device 100 further includes a reading unit 130 used to read verification codes in the container for verification so that if the verification is successful, the communication unit 110 establishes the communication, and/or, read mask codes in the container for matching so that if the match is successful, the communication unit 110 establishes the communication.

In some embodiments, continuing to refer to FIG. 7, the consumption control device 100 further includes an output unit 140 used to output visual and/or audible information according to the operation mode and/or an action performed by the apparatus, and output alarm-type visual and/or audible information if the apparatus fails to detect the container within a preset time.

In some embodiments, the control unit 120 is further used to control the apparatus to start up and load firmware information. If the apparatus does not detect the container within the preset time, the apparatus operates in a default mode, or enters a standby state or a low-power state.

In some embodiments, the control unit 120 is further used to, if a firmware version of the apparatus is inconsistent with a firmware version of the container and a firmware version recorded in the container is a newer version than the firmware version of the apparatus, control the apparatus to upgrade the firmware according to firmware binary codes of the container.

### Third embodiment

This embodiment of the present disclosure further provides an apparatus. Referring to FIG. 8, it shows hardware structure of an apparatus capable of executing the consumable consumption control method shown in FIG. 1, FIG. 3 to FIG. 5. The apparatus 10 may be the apparatus 10 shown in FIG. 2.

The apparatus 10 includes: at least one processor 10a; and a memory 10b in communication with the at least one processor 10a. FIG. 8 takes one processor 10a as an example. The memory 10b stores instructions that can be executed by the at least one processor 10a. The instructions, when are executed by the at least one processor 10a, cause the at least one processor 10a to execute the consumable consumption control method shown in FIG. 1, FIG. 3 to FIG. 5. The processor 10a and the memory 10b can be connected via a bus or other manners, and FIG. 8 takes the connection via a bus as an example. Optionally, the memory 10b may also be integrated on the processor 10a.

The memory 10b, as a non-volatile computer-readable storage medium, can be used to store non-volatile software programs, non-volatile computer executable programs and modules, such as program instructions/modules corresponding to the consumable consumption control method in the embodiment of the present disclosure, for example, the modules or units shown in FIG. 6 and FIG. 7. The processor 10a executes the non-volatile software programs, instructions and modules stored in the memory 10b, thereby performing various functional applications and data processing of a server, that is, realizing the consumable consumption control method in the above method embodiment.

The memory 10b may include a program storage area and a data storage area. The program storage area may store an operating system and an application required for at least one function. The data storage area may store data created according to the use of the consumable consumption control device, etc. In addition, the memory 10b may include a high-speed random access memory, and may also include a non-volatile memory, such as at least one disk storage device, a flash memory device, or other non-volatile solid-state storage device. In some embodiments, the memory 10b may optionally include a memory remotely arranged relative to the processor 10a, and the remote memory may be connected to the consumable consumption control device via a network. Examples of the above network include, but are not limited to, the Internet, an intranet, a local area network, a mobile communication network, and combinations thereof.

The one or more modules are stored in the memory 10b, and when executed by the one or more processors 10a, the consumable consumption control method in any of the above method embodiments is executed, for example, executing the method steps shown in FIG. 1, and FIG. 3 to FIG. 5, and realizing functions of each module and each unit in FIG. 6 and FIG. 7.

The above product can execute the method provided by the embodiment of the present disclosure, and has corresponding functional modules to execute the method and beneficial effects. For technical details not fully described in this embodiment, can refer to the method provided by the embodiment of the present disclosure.

### Fourth embodiment

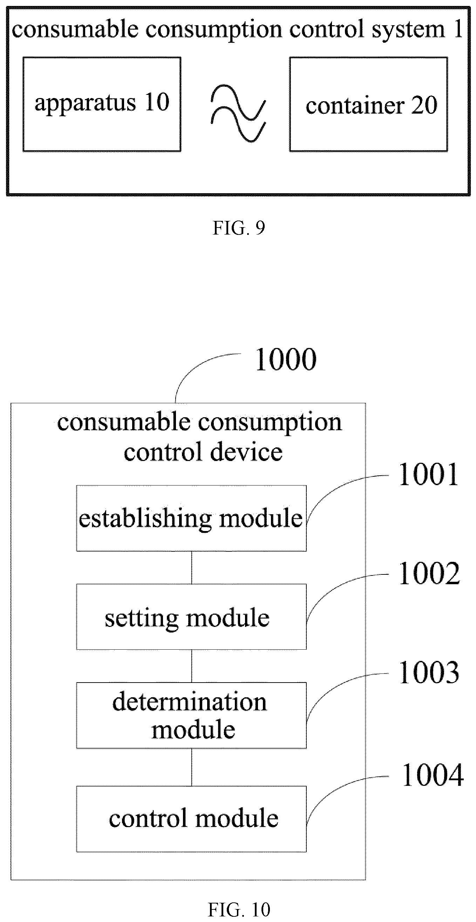

This embodiment of the present disclosure provides a consumable consumption control system. Referring to FIG. 9, it shows a consumable consumption control system according to one embodiment of the present disclosure. The consumable consumption control system 1 includes: a container 20 and the apparatus 10 as described in the third embodiment. The container 20 is configured to be compatible with and load a number of consumables of different types and sizes. The apparatus 10 is configured to communicate with the container 20 when the apparatus 10 is within a preset range of the container.

The apparatus 10 may be the apparatus 10 described in the first embodiment and FIG. 2, and have an electronic tag controller provided therein as shown in FIG. 2; and/or the apparatus 10 may be the apparatus 10 described in the third embodiment and FIG. 8. The structure of the apparatus 10 may refer to the descriptions of the first embodiment and the third embodiment and their accompanying drawings, and will not be described in detail here.

The container 20 may be the container 20 as described in the first embodiment and FIG. 2. Therefore, referring to FIG. 2, an electronic tag is provided on the container 20. The structure of the container 20 may refer to the descriptions of the first embodiment and its accompanying drawings, and will not be described in detail here.

When establishing the communication between the container 20 and the apparatus 10, establishment of a communication channel is actively initiated by the apparatus 10, and the container 20, as the responder, is the passive party. Therefore, the communication mode is communication.

As shown in FIG. 10, one embodiment of the present disclosure provides a consumable consumption control device 1000, including:
an establishing module 1001 configured to, when an apparatus that consumes consumables moves to a preset range of a container for loading consumables, establish communication between the apparatus and the container so that the apparatus obtains consumable information of the consumables and operation instructions of the container;
a setting module 1002 configured to set an operation mode of the apparatus according to the operation instructions;
a determination module 1003 configured to determine consumption setting of the consumables according to the consumable information;
a control module 1004 configured to control the apparatus to operate according to the operation mode and consume the consumables according to the consumption setting.

The embodiments of the present disclosure provide the consumable consumption control method, device and system. In the method, when an apparatus that consumes consumables moves to a preset range of a container for loading consumables, communication between the apparatus and the container is established so that the apparatus obtains consumable information of the consumables and operation instructions of the container; then, an operation mode of the apparatus is set according to the operation instructions, and consumption setting of the consumables may be determined according to the consumable information. The method provided in the present disclosure can control the apparatus to operate in accordance with the operation mode and consume the consumable in accordance with the consumption setting, thereby realizing intelligent management of the consumable consumption status and the operation mode of the apparatus.

It is to be noted that the above apparatus embodiments are merely illustrative, units described as separate components may or may not be physically separated, and components displayed as units may or may not be physical units, that is, they may be located in one place or may be distributed on multiple network units. Some or all of the modules may be selected according to actual needs to achieve the purpose of the solution of this embodiment.

It is to be noted that division of units in the embodiment of the present disclosure is only a logical function division; in actual implementation, all or part of the units may be integrated into one physical entity, or may also be physically separated. All of these units may be implemented in the form of using processing components to call software, or may be implemented by hardware, or some units are implemented in the form of using processing components to call software and some units are implemented by hardware. For example, the determination module may be a separate processing element, or may be integrated into a chip of the above device; in addition, the determination module may also be stored in the form of program codes in the memory of the above device, and is called by a certain processing element of the above device to execute the function of the above determination unit. The implementation of other modules is similar. In addition, all or part of these modules may be integrated together or implemented independently. The processing element described here may be an integrated circuit with signal processing capabilities. In the implementation process, each step of the above method or each of the above modules may be completed by instructions of hardware integrated logic circuits or software in the processor element.

For example, each module, unit, sub-unit or sub-module may be one or more integrated circuits configured to implement the above method, such as one or more application specific integrated circuits (ASICs), or one or multiple digital signal processors (DSP), or one or more field programmable gate arrays (FPGA). For another example, when one of the above units is implemented in the form of using a processing element to call program codes, the processing element may be a general-purpose processor, such as a central processing unit (CPU) or other processors that can call the program codes. For another example, these units may be integrated together and implemented in the form of a system-on-a-chip (SOC).

The terms "first", "second" and the like in the description and claims of the present disclosure are used to distinguish similar objects and are not necessarily used to describe a specific order or sequence. It is to be understood that data so used are interchangeable under appropriate circumstances so that the embodiments of the disclosure described herein may be implemented, for example, in sequences other than those illustrated or described herein. In addition, the terms "including" and "having" and any variations thereof are intended to cover non-exclusive inclusions, for example, a process, method, system, product or device that includes a sequence of steps or units needs not be limited to those steps or units that are expressly listed, but may include steps or units that are not expressly listed or that are inherent to the process, method, product or device. In addition, "and/or" in the description and claims is used to indicate at least one of connected objects, for example, A and/or B and/or C, means that there are seven situations: there is A alone, there is B alone, there is C alone, there are both A and B, there are both B and C, there are both A and C, and there are A, B and C. Similarly, "at least one of A and B" in the specification and claims means that there is A alone, there is B alone, or there are both A and B.

Through the above description of the embodiments, those skilled in the art can clearly understand that the methods of the above embodiments may be implemented by means of software plus necessary general hardware platform, of course, implemented by hardware. Those skilled in the art can understand that all or part of the processes in the above method embodiment can be completed by instructing related hardware through a computer program, and the program can be stored in a computer-readable storage medium. When the program is executed, it may include processes of the above methods of the embodiments. The storage medium may be a disk, an optical disk, a read-only memory (ROM) or a random access memory (RAM), etc.

Finally, it should be noted that the above embodiments are only used to illustrate the technical solutions of the present disclosure, but not to limit it. Under the concept of the present disclosure, the technical features of the above embodiments or other different embodiments may be combined, the steps therein may be performed in any sequence, and various variations may be derived in different aspects of the present disclosure, which are not detailed herein for brevity of description. Although the present disclosure has been described in detail with reference to the foregoing embodiments, those of ordinary skill in the art will understand that: modifications can be made to the technical solutions described in the foregoing embodiments, or equivalent substitutions can be made to some of the technical features. However, these modifications or substitutions do not cause the essence of the corresponding technical solutions to deviate from the spirit and scope of the technical solutions in the embodiments of the present disclosure.

## Claims

1. A consumable consumption control method, comprising:
when an apparatus that consumes a consumable moves to a preset range of a container for loading the consumable, establishing communication between the apparatus and the container so that the apparatus obtains consumable information of the consumable and an operation instruction of the container;
setting an operation mode of the apparatus according to the operation instruction;
determining consumption setting of the consumable according to the consumable information; and
controlling the apparatus to operate according to the operation mode and consume the consumable according to the consumption setting.

2. The method according to claim 1, wherein the container is provided with an electronic tag, and the electronic tag stores the consumable information;
the apparatus is provided with an electronic tag controller, and the electronic tag controller is configured to detect the electronic tag within the preset range and establish a communication connection between the apparatus and the container.

3. The method according to claim 2, wherein the electronic tag is a radio frequency identification tag, and the electronic tag controller is a radio frequency identification tag reader;
or,
the electronic tag is a near field communication tag, and the electronic tag controller is a near field communication tag reader.

4. The method according to claim 1, wherein the apparatus is provided with a plurality of buttons;
the setting an operation mode of the apparatus, comprises:
setting operation modes corresponding to the buttons according to the consumable information; and
selecting the operation mode of the apparatus through the buttons.

5. The method according to claim 1, wherein the consumption setting at least comprises a push amount, push duration and/or push number of the consumable;
the apparatus is further provided with a micro pump;
the consuming the consumable according to the consumption setting, comprises:
controlling the push amount, push duration and/or push number of the consumable through the micro pump.

6. The method according to claim 1, wherein the consumable information is general information of the consumable, and the consumable information at least comprises type, brand, manufacturer, model, date, batch, raw material and/or viscosity of the consumable.

7. The method according to any one of claims 1 to 6, wherein before the establishing communication between the apparatus and the container, the method further comprises:
reading verification codes in the container for verification;
if the verification is successful, establishing the communication;
and/or,
reading mask codes in the container for matching;
if the match is successful, establishing the communication.

8. The method according to any one of claims 1 to 6, wherein the method further comprises:
outputting, by the apparatus, visual and/or audible information, according to the operation mode and/or an action performed by the apparatus;
wherein if the apparatus fails to detect the container within a preset time, the apparatus outputs alarm-type visual and/or audible information.

9. The method according to any one of claims 1 to 6, wherein the method further comprises:
controlling the apparatus to start up and load firmware information;
wherein if the apparatus does not detect the container within a preset time, the apparatus operates in a default mode, or enters a standby state or a low-power state.

10. The method according to claim 9, wherein after the establishing communication between the apparatus and the container, the method further comprises:
if a firmware version of the apparatus is inconsistent with a firmware version of the container and a firmware version recorded in the container is a newer version than the firmware version of the apparatus, controlling the apparatus to upgrade the firmware according to firmware binary codes of the container.

11. An apparatus, comprising:
at least one processor; and,
a memory in communication with the at least one processor;
wherein the memory stores instructions executable by the at least one processor; the instructions, when executed by the at least one processor, cause the at least one processor to perform the method according to any one of claims 1 to 10.

12. A consumable consumption control system, comprising:
a container and the apparatus according to claim 10;
wherein the container is configured to be compatible with and load consumables of several different types and sizes;
the apparatus is configured to communicate with the container when the apparatus is within a preset range of the container.

13. The system according to claim 12, wherein the container is provided with an electronic tag, and the apparatus is provided with an electronic tag controller.

14. A consumable consumption control device, comprising:
an establishing module configured to, when an apparatus that consumes a consumable moves to a preset range of a container for loading the consumable, establish communication between the apparatus and the container so that the apparatus obtains consumable information of the consumable and an operation instruction of the container;
a setting module configured to set an operation mode of the apparatus according to the operation instruction;
a determination module configured to determine consumption setting of the consumable according to the consumable information;
a control module configured to control the apparatus to operate according to the operation mode and consume the consumable according to the consumption setting.
